# EUROPÄISCHE PATENTSCHRIFT

(11) **EP 2 369 409 B1**
(45) Veröffentlichungstag und Bekanntmachung des Hinweises auf die Patenterteilung: **26.02.2014**
(21) Anmeldenummer: 10002479.3
(22) Anmeldetag: 10.03.2010
(51) Int. Cl.: G03B 15/07

(54) **Anordnung zum Positionieren eines Objekts**
Assembly for positioning an object
Agencement de positionnement d'un objet

(43) Veröffentlichungstag der Anmeldung: 28.09.2011
(73) Patentinhaber: 3D-Viz.com AG, 6340 Baar (CH)
(72) Erfinder: Keresztes, Marcus, CH-6300 Zug (CH)
(74) Vertreter: Hössle Patentanwälte Partnerschaft

(56) Entgegenhaltungen:
- US-A- 5 778 258
- US-A- 6 106 124
- US-A1- 2001 041 064

## Beschreibung

Die Erfindung betrifft eine Anordnung zum Positionieren eines Objekts, um dieses Objekt einmal oder in einer Mehrzahl an Postionen und/oder aus einer Vielzahl von Orientierungen bzw. Blickwinkeln aufzunehmen.

Zum Erzeugen eines dreidimensionalen Modells eines Objekts für eine dreidimensionale Visualisierung dieses Objekts ist es bekannt, zweidimensionale Bilder von diesem Objekt aufzunehmen und auf Grundlage dieser zweidimensionalen Bilder ein 3D-Modell des Objekts zu erstellen.

Aus der Druckschrift EP 1 524 864 A1 ist ein System zum Fotografieren dreidimensionaler Objekte bekannt. Das beschriebene System umfasst eine fluoreszierende Lichteinheit auf einer Kameraeinheit und eine davor angeordnete Streulichtblende zur Reduzierung greller Lichteinstrahlung. Weiterhin ist ein Drehteller vorgesehen, auf dem das Objekt abzustellen ist. Die Ausrichtung bzw. Orientierung des Drehtellers wird durch Markierungen, die von einem Sensor erfasst werden, angezeigt. Der Drehteller wird über einen Antrieb gedreht, der wiederum über eine Steuerung angesteuert wird.

Ein Montagetisch für eine videounterstützte Montage von Teilbildern zu einem Montageprodukt ist aus der Druckschrift EP 499 998 A2 bekannt. Die beschriebene Vorrichtung umfasst den Montagetisch, mindestens eine über dem Montagetisch fahrbare Videokamera zur Aufnahme eines jeweiligen Teilbilds und eine Positioniervorrichtung, mit der die Positionierung jedes Teilbilds mit Hilfe von aus dem aufgenommenen Teilbild erzeugten elektronischen Bildpositionsignalen erfolgt.

Die Druckschrift DE 201 18 522 U1 beschreibt einen Präzisionsdrehtisch für fotografische Objektaufnahmen, bei dem das Objekt auf einem Drehteller angeordnet ist. Der Antrieb des Drehtellers erfolgt über einen Zahnriemen, der in seiner gesamten Länge kreisförmig fixiert und mit dem Drehteller selbst in konzentrischer Lage verbunden ist. Ein in diesen Zahnriemen an beliebiger Stelle eingreifendes Antriebsritzel ist auf einer Antriebswelle eines Motors oder Zwischengetriebes in einem feststehenden Unterbau des Drehtischs befestigt.

Bei den bekannten Drehtellern ist nachteilig, dass diese nur schwer zugänglich sind, was ein Fotografieren bzw. Aufnehmen des auf dem Drehteller befindlichen Objekts erschwert.

Außerdem ist zu beachten, dass die aufgenommenen Bilder des Objekts von dem Hintergrund freizuschneiden sind. Dies ist erforderlich, wenn diese Bilder zur Berechnung bzw. Ermittlung eines 3D-Modells weitere bearbeitet werden und auch wenn die zweidimensionalen Bilder zur Erzeugung eines dreidimensionalen Eindrucks dargestellt werden.

Die vorgestellte Anordnung zum Positionieren eines Objekts weist eine Erweiterung auf, an deren einem Ende eine Auflage angeordnet ist, auf der das Objekt zu positionieren und die von unten zu beleuchten ist.

Durch die Anordnung der Auflage als Objektträger auf der Erweiterung ist es möglich, das Objekt in einer gewissen bzw. in einer gewünschten Höhe zu positionieren, so dass dieses besser zugänglich und somit einfacher zu fotografieren ist. Von diesem Objekt können dann mehrere Aufnahmen angefertigt werden, indem bspw, eine Kamera um das Objekt bewegt wird, mehrere Kameras, die um das Objekt herum positioniert sind, verwendet werden, oder indem das Objekt bewegt bzw. gedreht wird. Dieses Bewegen des Objekts erfolgt regelmäßig über Bewegen der Auflage, die eine Unterlage bildet. Grundsätzlich ist es auch möglich, das Objekt mit einer Filmkamera aufzunehmen oder ein digitales Aufnahmeelement zu verwenden. Die Druckschrift US 2001/0041046 beschreibt solche Anordnungen.

Die Erweiterung ermöglicht ein leichtes Arbeiten. Das Objekt bzw. das abzulichtende Produkt kann von dem Nutzer im Stehen eingerichtet werden. Zudem ist eine viel differenziertere Ausleuchtung des Objekts möglich. Selbstverständlich können bei einem modularen Aufbau der gesamten Anordnung Erweiterungen unterschiedlicher Länge einfach ausgetauscht und daher genutzt werden. Dabei können beliebige Höhen eingestellt werden.

Die Auflage bzw. Unterlage wird von unten beleuchtet, um der Auflage, die für Licht halb- bzw. semitransparent sein kann, eine einheitliche Erscheinung, in der Regel eine einheitliche, typischerweise weiße Oberfläche, zu geben. Da die Beleuchtung der Auflage von unten erfolgt und das Objekt oben auf der Auflage angeordnet ist, dient diese vornehmlich oder gar ausschließlich zur Beleuchtung der Auflage. Weil diese während der Aufnahmen des Objekts einheitlich, bspw. einheitlich weiß, erscheint, ist das Freischneiden des Objekts bei der weiteren Bearbeitung stark vereinfacht oder ist sogar nicht mehr erforderlich.

Hierzu kann die semitransparente Auflage derart beschaffen sein, dass Licht von der Beleuchtung von unten nicht auf das Objekt trifft oder zumindest nur zu einem geringen bzw. vernachlässigbaren Teil durch die Auflage transmittiert. Für die Beleuchtung des Objekts sind dann andere Beleuchtungseinrichtungen, die um das Objekt, typischerweise oberhalb der Ebene der Auflage, angeordnet sind, vorgesehen.

Der Transmissionsgrad der Auflage ist durch Wahl des verwendeten Materials bzw, durch Auswahl und Zusammenstellung der Materialien wählbar und damit weitgehend frei einstellbar. Es können bspw. Materialien mit einer Lichtdurchlässigkeit von 24 % bis 92 % verwendet werden. Eine mögliche Ausgestaltung sieht eine Lichtdurchlässigkeit von etwa 45 % vor.

In Ausgestaltung ist die Auflage eine Scheibe. D.h. die Auflage verfügt über einen runden Grundriss. Es sind aber beliebige Grundrisse, wie bspw. oval, mehreckig usw., denkbar.

In einer weiteren Ausgestaltung ist die Auflage aus einem opalen Kunststoff und somit aus einem trüben Material hergestellt ist. Eine Auflage bzw. Scheibe aus einem opalen Kunststoff ermöglicht eine 3D-Visualisierung von vorzugsweise selbst stehenden Produkten ohne Nachbearbeitung in wenigen Minuten. Dabei wird das Objekt bspw. 12 oder 36 mal aufgenommen, um eine 3D-Visualisierung direkt zu erzeugen. Hierzu ist bspw,ein Softwarewerkzeug vorgesehen, mit dem die Anordnung, zweckmäßigerweise über eine graphische Benutzerschnittstelle, und auch der Ablauf des Fotografierens zu steuern ist.

Ein Beispiel für ein Material ist ein Acrylglas GF Opal WH 02 (gegossen nicht extrudiert) mit einer Lichtdurchlässigkeit von etwa 45 %.

Das Material der Auflage kann ermöglichen, dass nahezu keine Lichtanteile von der Beleuchtung von unten durch die Auflage transmittieren. Bei manchen Ausführungen kann lediglich diffuses Licht bzw. diffuse Lichtanteile von der Beleuchtung von unten durch die Auflage gelangen.

Alternativ kann ein Material mit hoher Transparenz, bspw. Glas, verwendet werden. Auf dieses Material kann eine Folie, bspw. eine Mattfolie, die der Auflage den gewünschten Transmissionsgrad verleiht, aufgebracht sein. Weitere mögliche Materialien sind Milchglas, Kunststoff, Plexiglas usw. Die Auflage kann auch mehrere Schichten aus unterschiedlichen Materialien umfassen.

Ist die Auflage drehbar ausgeführt, um das Objekt zu drehen, so ist diese in einer Ausgestaltung über die Erweiterung drehbar. Das bedeutet, dass die Erweiterung, an deren einem Ende die Auflage angeordnet ist, gedreht wird und damit die mit der Erweiterung verbundene Auflage rotiert wird. Hierzu kann an dem anderen Ende der Erweiterung ein Antrieb vorgesehen sein. In jedem Fall sollte darauf geachtet werden, dass das andere Ende der Erweiterung sicher gehalten ist, um der gesamten Anordnung ausreichend Stabilität zu geben.

In noch einer weiteren Ausgestaltung ist die Erweiterung teleskopartig ausgeführt. Damit kann die Höhe des Objekts bedarfsgemäß eingestellt werden.

Es kann vorgesehen sein, dass bspw. im Bereich der Erweiterung eine Beleuchtungseinrichtung angeordnet ist, mit der die Beleuchtung von unten erfolgt. Es hat sich als zweckmä-βig erwiesen, wenn diese Beleuchtungseinrichtung in der Höhe zu verstellen ist.

Für einen sicheren Stand der gesamten Anordnung kann an dem anderen Ende der Erweiterung ein Standelement vorgesehen sein. In dem Standelement kann der Antrieb vorgesehen sein, mit dem die Auflage bzw. die Erweiterung und damit die Auflage anzutreiben bzw,zu drehen ist.

Dieses Standelement ermöglicht eine dauerhaft präzise Positionierung des Objekts. Dies ist insbesondere wichtig, wenn die Aufnahmen des Objekts in einem gewissen Zeitraum aufgenommen werden. Das Standelement kann modular aufgebaut sein.

Des weiteren können Halterungen bzw. Halteelemente für Objekte vorgesehen sein, die mit der Erweiterung oder auch der Auflage verbunden sind. Für größere Objekte kann bspw. eine sogenannte Spinne vorgesehen sein, die aus einer Anzahl von strahlförmig zueinander angeordneten Leisten besteht. Integrierte Stützräder sorgen für die notwendige Stabilität. Es können diverse Halterungen für unterschiedliche Objekte eingesetzt werden. So kann bspw. eine Lampenhalterung, eine Schuhhalterung, eine Fahrradhalterung, eine Schmuckhalterung oder eine Halterung für eine Büste vorgesehen sein. Diese Halterung kann, üblicherweise über die Erweiterung, zu drehen sein. Auch bei der Halterung kann ein modularer Aufbau gegeben sein.

Es wird weiterhin ein Verfahren zum Positionieren eines Objekts auf einer Auflage, die von unten beleuchtet wird, vorgestellt. Dieses Verfahren wird mit einer vorstehend beschriebenen Anordnung durchgeführt.

Wird nur eine Kamera eingesetzt und sollen mehrere Aufnahmen von dem Objekt aus unterschiedlichen Blick- bzw. Aufnahmerichtungen angefertigt werden, bietet es sich an, dass die Auflage zwischen den einzelnen Aufnahmen gedreht wird. Dies kann mit einer Steuerung kontrolliert durchgeführt werden.

Weitere Vorteile und Ausgestaltungen der Erfindung ergeben sich aus der Beschreibung und der beiliegenden Zeichnung. Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist in den Ansprüchen definiert und ist anhand von Ausführungsformen in der Zeichnung schematisch dargestellt und wird unter Bezugnahme auf die Zeichnung ausführlich beschrieben.
- Figur 1: zeigt eine Ausführungsform der beschriebenen Anordnung zum Positionieren eines Objekts.
- Figur 2: zeigt eine Ausführungsform der Auflage.
- Figur 3: zeigt eine Ausführungsform der Erweiterung.
- Figur 4: zeigt eine Ausführungsform des Standelements.

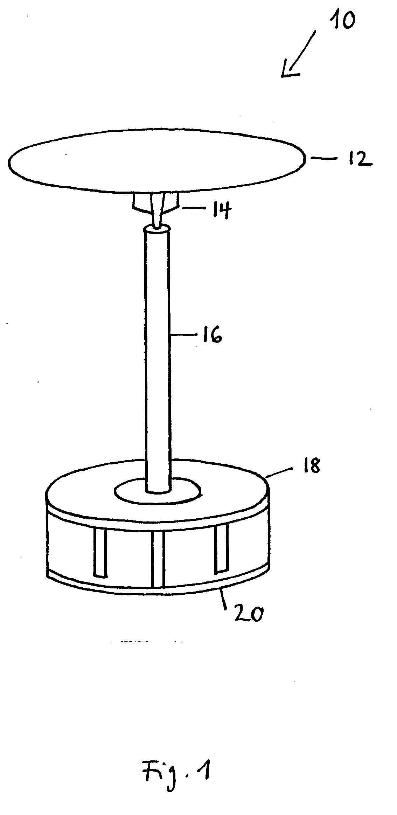

In Figur 1 ist eine Ausführung der Anordnung zum Positionieren eines Objekts dargestellt, die insgesamt mit der Bezugsziffer 10 bezeichnet ist.

Die Darstellung zeigt eine Auflage 12, die als Scheibe mit rundem Grundriss ausgebildet und aus einem opalen Kunststoff gefertigt ist. Auf diese Auflage 12 kann ein Objekt, von dem eine oder mehrere Aufnahmen anzufertigen sind, gelegt werden. Die Beleuchtung des Objekts für die fotografischen Aufnahmen erfolgt typischerweise von der Seite. Weiterhin wird die Auflage 12 von unten, das heißt von der dem Objekt abgewandten Seite der Auflage 12, her beleuchtet. Die besondere Ausgestaltung der Auflage 12 bewirkt, dass praktisch kein Licht, und wenn, dann nur geringe, ggf. diffuse Lichtanteile des Lichts der Beleuchtung von unten, durch die Auflage 12 gelangen. Diese Beleuchtung von unten bewirkt, dass die Auflage 12 einheitlich weiß erscheint und daher einen einheitlichen Hinter- bzw. Untergrund während des Fotografierens bildet. Dies ermöglicht ein einfaches Weiterverarbeiten der aufgenommenen zweidimensionalen Bilder bzw. der zugeordneten Bilddaten.

Die Auflage 12 ist über ein Kopplungselement 14 mit einem Ende einer Erweiterung 16 verbunden. Diese Erweiterung 16 ist bspw. aus Edelstahl gefertigt. Selbstverständlich können auch andere Werkstoffe zum Einsatz kommen. Das andere Ende der Erweiterung 16 ist in einem Standelement 18 verankert, in dem ein Antrieb 20, bspw. ein Schrittmotor, zum Antreiben bzw. Drehen der Erweiterung 16 vorgesehen ist. Es sind natürlich auch andere Antriebe einsetzbar. Hiermit lässt sich die Auflage 12 und damit das darauf abgelegte Objekt genau positionieren.

Für die Beleuchtung von unten kann an der Erweiterung 16 eine Beleuchtungseinrichtung (nicht dargestellt), die auch in der Höhe zu verstellen ist, angeordnet sein.

In dem gezeigten Fall ist die Erweiterung 16 als Stab ausgebildet. Es sind aber auch andere Ausgestaltungen denkbar. So kann die Erweiterung bspw. als Hohlzylinder ausgebildet sein, in dem dann eine Beleuchtungseinrichtung vorgesehen ist. In diesem Fall ist die Auflage oben an dem Hohlzylinder angeordnet und lässt sich bspw. über Magnete in Bezug zu dem Hohlzylinder drehen. Alternativ ist die Auflage auf den Hohlzylinder aufgesetzt und lässt sich mit diesem zusammen drehen.

Mit der dargestellten Anordnung 10 können beliebige Produkte, vorzugsweise Produkte, die selbst stehen, einfach visualisiert werden. Die Erweiterung 16 erlaubt ein ergonomisches und effizientes Arbeiten. Die Objekte bzw. Produkte können komfortabel eingerichtet werden. Durch den Abstand von Boden zum Objekt ist eine wesentlich differenziertere Ausleuchtung möglich. Mit Hilfe der Auflage 12 können Produkte, insbesondere aufgrund der speziellen Ausleuchtung, ohne Nachbearbeitung aufgenommen werden und somit Produktionszeiten in wenigen Minuten pro Produkt erreicht werden.

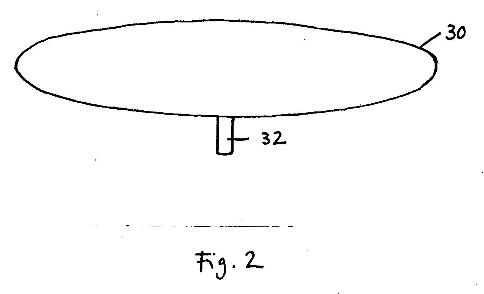

In Figur 2 ist eine Scheibe 30 dargestellt, die aus einem opalen Kunststoff gefertigt und als Auflage der Anordnung 10 gemäß Figur 1 dient. Die Scheibe 30 weist einen runden Grundriss auf und ist aus einer bspw. dünnen Platte aus einem opalen Kunststoff gefertigt. Die Oberseite der Scheibe 30 ist in diesem Fall glatt, kann aber auch etwas aufgeraut sein, um eine Spiegelung zu vermeiden. Die Figur 2 zeigt eine dünne Scheibe 30 mit rundem Grundriss. Selbstverständlich sind auch andere Grundrisse denkbar. Auch muss die Auflage nicht entsprechend der Scheibe 30 dünn sein.

In der gezeigten Ausführung verhindert das verwendete trübe Material der Scheibe 30 ein vollständiges Transmittieren von Licht oder verhindert dies zumindest weitgehend. Es ist zu beachten, dass der Transmissionsgrad durch Wahl der Art und Gestaltung der Auflage und durch Auswahl der verwendeten Materialien einstellbar ist.

Unten an der Scheibe 30 ist ein Kopplungselement 32 vorgesehen, mit dem die Scheibe 30 mit einer hier nicht dargestellten Erweiterung zu verbinden ist.

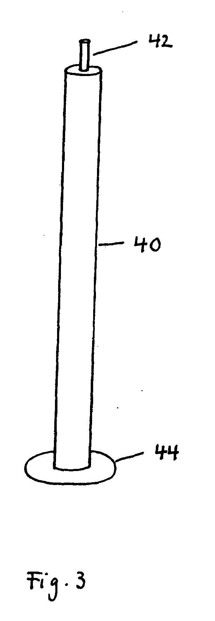

In Figur 3 ist eine Erweiterung, insgesamt mit der Bezugsziffer 40 bezeichnet, dargestellt. Diese Erweiterung 40 ist in diesem Fall aus Edelstahl gefertigt, kann aber auch aus einem anderen Material gefertigt sein, und weist an einem Ende eine Verjüngung 42 als Anschlussstück für ein Kopplungselement einer Auflage (nicht dargestellt) und an dem anderen Ende einen Flansch 44 zum Verbinden mit einem nicht dargestellten Standelement auf. Die gezeigte Erweiterung 40 ist in diesem Fall aus Edelstahl gefertigt. Es sind aber auch andere, geeignete Materialien, wir bspw. Holz, Glas, Plexiglas usw., denkbar.

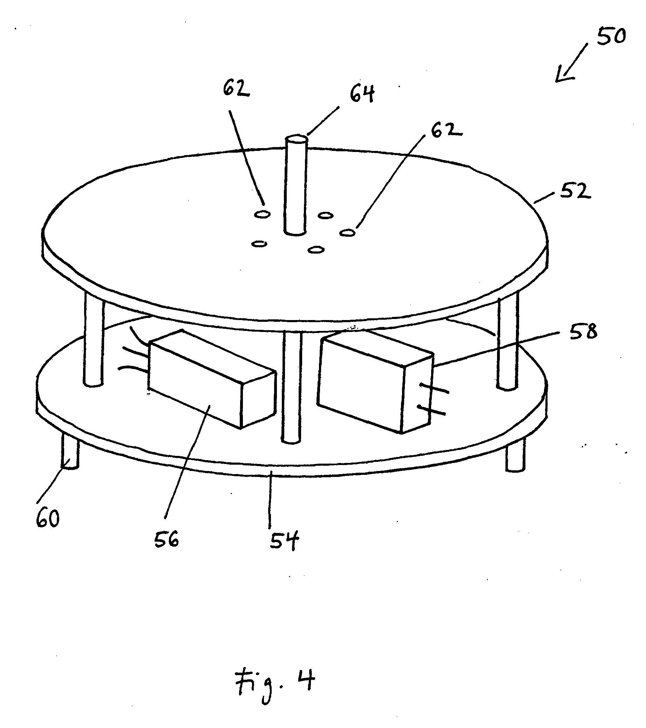

In Figur 4 ist ein Standelement 50 dargestellt. Dieses umfasst zwei parallel zueinander angeordnete Tafeln 52 und 54, zwischen denen ein Antrieb 56 und eine Steuerung 58 vorgesehen sind. Die untere Tafel 54 weist an ihrer Unterseite Standfüße 60 auf. Bei der oberen Tafel 52 sind oben mittig Öffnungen 62 und ein Anschlussstift 64 zum Ankoppeln einer Erweiterung (nicht dargestellt) vorgesehen. Es ist zu beachten, dass die Öffnungen 62 und der Anschlussstift 64 nicht mittig angeordnet sein müssen.

Das dargestellte Standelement 50 ist modular aufgebaut und ermöglicht eine große Flexibilität. Außerdem ist es problemlos in eine bestehende Anlage zu integrieren.

## Patentansprüche

1. Anordnung zum Positionieren eines Objekts um das Objekt aus einer Anzahl Blickwinkel aufzunehmen, mit einer Auflage (12), auf der das Objekt zu positionieren ist und die von unten zu beleuchten ist, wobei die Auflage (12) semitransparent ist, wobei die Beleuchtung der semitransparenten Auflage (12) von unten bewirkt, dass die Auflage (12) einen einheitlichen Hinter- bzw. Untergrund bildet, **dadurch gekennzeichnet, dass** die Anordnung eine teleskopartig ausgeführte Erweiterung (16, 40) umfasst, an der eine Beleuchtungseinrichtung, die auch in der Höhe zu verstellen ist und zur Beleuchtung der Auflage (12) dient, angeordnet ist.

2. Anordnung nach einem der Ansprüche 1, bei der die Auflage (12) eine Scheibe (30) ist.

3. Anordnung nach einem der Ansprüche 1 bis 2, bei der die Auflage (12) aus einem opalen Kunststoff hergestellt ist.

4. Anordnung nach einem der Ansprüche 1 bis 3, bei der die Auflage (12) aus einem Material mit hoher Transparenz hergestellt ist.

5. Anordnung nach Anspruch 4, bei dem auf das Material mit hoher Transparenz eine Folie aufgebracht ist.

6. Anordnung nach einem der Ansprüche 1 bis 5, bei der die Auflage (12) drehbar ist.

7. Anordnung nach Anspruch 6, bei der die Auflage (12) über die Erweiterung (16, 40) drehbar ist.

8. Anordnung nach einem der Ansprüche 1 bis 7, bei der eine Beleuchtungseinrichtung angeordnet ist.

9. Anordnung nach Anspruch 8, bei der die Beleuchtungseinrichtung in der Höhe zu verstellen ist.

10. Anordnung nach einem der Ansprüche 1 bis 9, bei der an dem anderen Ende der Erweiterung (16, 40) ein Standelement (18, 50) vorgesehen ist.

11. Anordnung nach Anspruch 10, bei der in dem Standelement (18, 50) ein Antrieb (20, 56) vorgesehen ist.

12. Verfahren zum Positionieren eines Objekts auf einer Auflage (12) mit einer Anordnung nach einem der Ansprüche 1 bis 11, wobei die Auflage (12) von unten beleuchtet wird.

## Claims

1. Assembly for positioning an object in order to capture the object from a number of viewing angles, comprising a support (12) on which the object is to be positioned and which can be illuminated from below, wherein the support (12) is semi-transparent, wherein the illumination of the semi-transparent support (12) from below causes that the support (12) forms a uniform background, **characterized in that** the assembly comprises a telescopically arranged extension (16, 40) at which an illumination means which can also be height-adjusted and serves for illuminating the support (12) is arranged.

2. Assembly according to Claim 1, wherein the support (12) is a disk (30).

3. Assembly according to one of Claims 1 to 2, wherein the support (12) is formed of an opal plastic material.

4. Assembly according to one of Claims 1 to 3, wherein the support (12) is formed of a material having a high transparency.

5. Assembly according to Claim 4, wherein a film is applied onto the material having a high transparency.

6. Assembly according to one of Claims 1 to 5, wherein the support (12) is rotatable.

7. Assembly according to Claim 6, wherein the support (12) is rotatable via the extension (16, 40).

8. Assembly according to one of Claims 1 to 7, wherein an illumination means is arranged.

9. Assembly according to Claim 8, wherein the illumination means is height-adjustable.

10. Assembly according to one of Claims 1 to 9, wherein a stand element (18, 50) is provided at the other end of the extension (16, 40).

11. Assembly according to Claim 10, wherein a drive (20, 56) is provided in the stand element (18, 50).

12. Method for positioning an object on a support (12) having an assembly according to one of Claims 1 to 11, wherein the support (12) is illuminated from below.

## Revendications

1. Agencement pour positionner un objet afin de prendre des images de l'objet depuis un certain nombre d'angles de prise de vue, comprenant un appui (12) sur lequel l'objet doit être positionné et qui doit être éclairé depuis le dessous, dans lequel l'appui (12) est semi-transparent, l'éclairage de l'appui semi-transparent (12) depuis le dessous ayant pour effet que l'appui (12) forme un arrièreplan ou un plan de base unitaire, **caractérisé en ce que** l'agencement inclut un prolongateur (16, 40) réalisé de manière télescopique, sur lequel est agencé un système d'éclairage, qui peut être également réglé en hauteur et qui sert à l'éclairage de l'appui (12).

2. Agencement selon la revendication 1, dans lequel l'appui (12) est un disque (30).

3. Agencement selon l'une des revendications 1 à 2, dans lequel l'appui (12) est réalisé d'une matière plastique opaline.

4. Agencement selon l'une des revendications 1 à 3, dans lequel l'appui (12) est fabriqué d'un matériau à haute transparence.

5. Agencement selon la revendication 4, dans lequel un film est appliqué sur le matériau à haute transparence.

6. Agencement selon l'une des revendications 1 à 5, dans lequel l'appui (12) est rotatif.

7. Agencement selon la revendication 6, dans lequel l'appui (12) est capable de rotation via le prolongateur (16, 40).

8. Agencement selon l'une des revendications 1 à 7, dans lequel est agencé un système d'éclairage.

9. Agencement selon la revendication 8, dans lequel le système d'éclairage est réglable en hauteur.

10. Agencement selon l'une des revendications 1 à 9, dans lequel un élément support (18, 50) est prévu à l'autre extrémité du prolongateur (16, 40).

11. Agencement selon la revendication 10, dans lequel un entraînement (20, 56) est prévu dans l'élément support (18, 50).

12. Procédé pour le positionnement d'un objet sur un appui (12) avec un agencement selon l'une des revendications 1 à 11, dans lequel l'appui (12) est éclairé depuis le dessous.
